(19) Europäisches Patentamt
European Patent Office
Office européen des brevets

(11) EP 3 010 743 B1

(12) FASCICULE DE BREVET EUROPEEN

(45) Date de publication et mention
de la délivrance du brevet:
**12.04.2017 Bulletin 2017/15**

(51) Int Cl.:
*B60K 6/12* *(2006.01)*   *B60K 17/356* *(2006.01)*
*F04B 9/10* *(2006.01)*   *F04B 49/00* *(2006.01)*
*F03C 1/26* *(2006.01)*   *F16H 61/423* *(2010.01)*
*F16H 61/4139* *(2010.01)*

(21) Numéro de dépôt: **14739214.6**

(22) Date de dépôt: **10.06.2014**

(86) Numéro de dépôt international:
**PCT/FR2014/051392**

(87) Numéro de publication internationale:
**WO 2014/202864 (24.12.2014 Gazette 2014/52)**

(54) **DISPOSITIF DE GAVAGE COMPRENANT UN MOTEUR HYDRAULIQUE ENTRAINANT UNE POMPE DE GAVAGE**

LADEEINRICHTUNG BEINHALTEND EINEN HYDRAULISCHEN MOTOR ZUM ANTRIEB EINER SPEISEPUMPE

FORCE-FEEDING DEVICE COMPRISING A HYDRAULIC MOTOR DRIVING A FORCE-FEEDING PUMP

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.06.2013 FR 1355643**

(43) Date de publication de la demande:
**27.04.2016 Bulletin 2016/17**

(73) Titulaire: **Technoboost**
**75116 Paris (FR)**

(72) Inventeurs:
• **LE DREN, Arnaud**
**F-91800 Brunoy (FR)**
• **JOUBERT, Frederic**
**F-67730 Châtenois (FR)**
• **MLINARIC, Arnaud**
**F-95300 Livilliers (FR)**

(74) Mandataire: **Rosenberg, Muriel Sylvie**
**Peugeot Citroën Automobiles SA**
**Propriété Industrielle - LG 081**
**18 rue des Fauvelles**
**92250 La Garenne Colombes (FR)**

(56) Documents cités:
WO-A1-2011/045519    DE-A1-102009 011 247
US-A1- 2005 132 701    US-A1- 2010 141 024
US-A1- 2010 287 922    US-B2- 7 107 767

**Description**

La présente invention concerne un dispositif de gavage pour un circuit hydraulique, ainsi qu'un circuit hydraulique et un véhicule automobile hybride hydraulique comportant un tel dispositif de gavage.

Les circuits hydrauliques comportent généralement un système comme une pompe, prélevant le fluide dans une partie basse pression de ce circuit pour générer une pression dans une partie haute pression, qui est stockée dans un accumulateur haute pression afin d'alimenter au moins un récepteur comprenant un retour vers la partie basse pression.

Ce type de circuit hydraulique utilisé dans l'industrie ou pour différents types de véhicules, en particulier pour la traction de véhicules automobiles hybrides hydrauliques, peut comporter une partie basse pression maintenue à une pression minimum par un dispositif de gavage, afin d'alimenter la pompe à cette pression minimum pour éviter une cavitation du fluide, notamment avec les débits les plus importants.

Un type de dispositif de gavage connu comporte un accumulateur pressurisé par un gaz, relié à la partie basse pression du circuit pour maintenir une pression minimum dans cette partie. Toutefois cet accumulateur comporte un encombrement et une masse qui sont pénalisantes, en particulier pour un véhicule automobile. De plus la pression maintenue par le gaz est fortement dépendante de la température, les paramètres de fonctionnement du circuit hydraulique sont difficiles à optimiser.

Un autre type de dispositif de gavage connu, présenté notamment par le document FR-A1-2978506, comporte une pompe de gavage prélevant le fluide dans un réservoir à la pression atmosphérique, dont l'arbre est aligné sur celui de la pompe haute pression pour être entraîné pas un moteur électrique. Ce dispositif nécessite un moteur électrique avec ses moyens de commande, qui consomme de l'énergie électrique et présente un certain coût.

Le document WO 2011/045519 A1 décrit une chaîne de traction pour véhicule hybride hydraulique.

Le document US 2010/141024 A1 décrit un système de récupération d'énergie de freinage pour un véhicule.

Le document US 2005/132701 A1 décrit un système à fluide hydraulique sous pression avec une pompe de charge.

La présente invention a notamment pour but d'éviter ces inconvénients de la technique antérieure.

Elle propose à cet effet un dispositif de gavage pour un circuit hydraulique selon la revendication 1.

Un avantage de ce dispositif de gavage est que d'une manière simple et économique avec des moyens uniquement hydrauliques, sans commande électrique ni consommation d'énergie électrique, on obtient une pression de gavage très stable grâce à une autorégulation de la pression délivrée par la pompe de gavage.

Le dispositif de gavage selon l'invention peut de plus comporter une ou plusieurs des caractéristiques suivantes, qui peuvent être combinées entre elles.

Selon un mode de réalisation, l'entraînement de la pompe de gavage par le moteur hydraulique se fait avec une liaison directe entre les arbres de ces deux machines qui sont alignés.

Selon un autre mode de réalisation l'entraînement de la pompe de gavage par le moteur hydraulique se fait avec une transmission comprenant une démultiplication constante.

En complément, le circuit basse pression peut comporter un clapet de régulation de la pression de gavage, qui laisse passer le fluide au-dessus d'un seuil de pression pour le renvoyer vers le réservoir.

Avantageusement, le dispositif de gavage comporte un dimensionnement du moteur hydraulique et des canalisations d'alimentation de ce moteur, qui donne quand la pompe de gavage est bloquée, un débit de fuite dans ce moteur qui est faible.

L'invention a aussi pour objet un circuit hydraulique disposant d'un circuit haute pression et d'un circuit basse pression reliés à un système générant la haute pression et à des récepteurs, ce circuit comportant un dispositif de gavage maintenant une pression minimum dans le circuit basse pression, comprenant l'une quelconque des caractéristiques précédentes.

L'invention a de plus pour objet un véhicule automobile hybride comprenant un circuit hydraulique disposant d'un circuit haute pression et d'un circuit basse pression reliés à un système générant la haute pression et à des récepteurs, ce circuit comportant un dispositif de gavage maintenant une pression minimum dans le circuit basse pression, comprenant l'une quelconque des caractéristiques précédentes.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :

- la figure 1 est un schéma présentant un système de gavage selon l'art antérieur, comprenant un accumulateur haute pression et un accumulateur basse pression ;
- la figure 2 est un schéma présentant un système de gavage selon l'art antérieur, comprenant une pompe de gavage entraînée par un moteur électrique ; et
- la figure 3 est un schéma présentant un système de gavage selon l'invention.

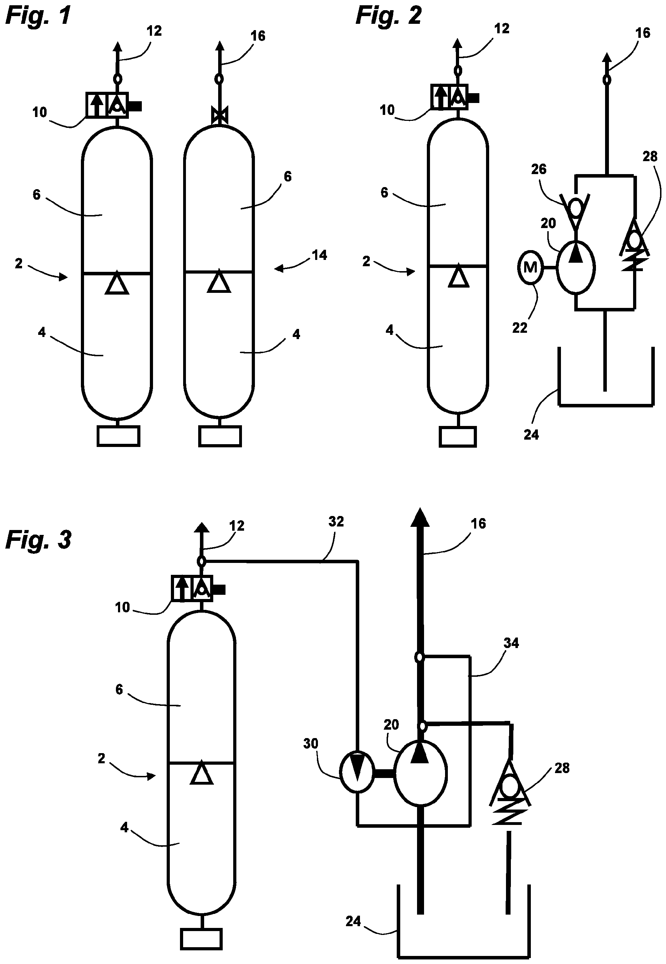

La figure 1 présente pour un circuit hydraulique, un accumulateur haute pression 2 comprenant un gaz sous forte pression 4, et une chambre hydraulique 6 séparée par une membrane souple permettant de maintenir cette chambre en permanence sous pression. La chambre hydraulique 6 est reliée au circuit haute pression 12 du circuit hydraulique par une vanne 10 comprenant un clapet anti-retour.

Le circuit hydraulique comporte un accumulateur basse pression 14 comprenant un gaz sous une pression modérée 4, et une chambre hydraulique 6 séparée de la même manière par une membrane souple.

L'accumulateur basse pression 14 constitue un dispositif de gavage comprenant le gaz avec la pression modérée 4 communiquant en permanence cette pression à la partie basse pression 16 du circuit hydraulique. De cette manière la pompe générant la haute pression du circuit reçoit le fluide avec ce niveau modéré de pression, afin d'alimenter en permanence cette pompe en particulier pour les débits les plus élevés, et d'éviter des phénomènes de cavitation pouvant l'endommager.

L'accumulateur basse pression 14 constitue un ensemble relativement lourd et encombrant, en particulier si l'on veut disposer d'une réserve de fluide importante. De plus la pression de gavage délivrée par cet accumulateur 14 dépend fortement du niveau de remplissage de sa chambre hydraulique 6 qui est complémentaire du volume laissé libre pour le gaz 4, ainsi que de la température de ce gaz.

La figure 2 présente un circuit hydraulique comprenant un accumulateur haute pression 2 similaire à celui présenté figure 1, et un dispositif de gavage comportant une pompe de gavage 20 entraînée par un moteur électrique 22, qui dispose d'une entrée prélevant le fluide dans un réservoir 24 à la pression atmosphérique.

La pompe de gavage 20 refoule le fluide à la pression modérée de gavage, dans le circuit basse pression 16. Ce circuit basse pression 16 comprend un clapet de dérivation 28 régulant la pression de gavage, qui laisse passer le fluide au-dessus d'un seuil de pression pour le renvoyer vers le réservoir 24. On obtient de cette manière une pression de gavage précise et stable.

Cependant le moteur électrique 22 nécessite une source d'énergie électrique et une commande délivrant une puissance suffisante pour suivre les contraintes dynamiques de consommation du fluide. La consommation électrique peut être relativement élevée, en particulier pour les débits importants. De plus ce dispositif de gavage comporte une masse ainsi qu'un coût importants, en particulier pour les véhicules automobiles sur lesquels ces deux points sont critiques.

La figure 3 présente un circuit hydraulique comprenant un accumulateur haute pression 2 similaire à celui présenté figure 1, et un dispositif de gavage comportant une pompe de gavage 20 entraînée de manière mécanique par un moteur hydraulique 30 directement alimenté par une canalisation 32 reliée au circuit haute pression 12. La sortie du moteur hydraulique 30 est reliée au circuit basse pression 16.

La pompe de gavage 20 prélève le fluide dans le réservoir à la pression atmosphérique 24, pour le refouler à la pression modérée de gavage dans le circuit basse pression 16.

En particulier la liaison mécanique entre le moteur hydraulique 30 et la pompe de gavage 20, peut se faire de manière simple avec une liaison directe entre les arbres alignés de ces deux machines, de manière à obtenir les mêmes vitesses de rotation. Il peut aussi se faire avec une transmission comprenant une démultiplication constante, donnant des vitesses proportionnelles entre ces deux machines.

La puissance du moteur hydraulique 30 dépend de la différence de pression entre le circuit haute pression 12 et le circuit basse pression 16.

La canalisation 32 d'alimentation du moteur hydraulique 30 ainsi que sa canalisation de sortie 34 peuvent être de petite section, le débit prélevé dans le circuit haute pression 12 pour alimenter ce moteur étant faible, similaire à un débit de fuite. Les canalisations d'aspiration et de refoulement de la pompe de gavage 20, comportent un diamètre important, le débit pouvant être élevé.

Le moteur hydraulique 30 et la pompe de gavage 20 sont dimensionnés pour des puissances identiques, avec pour le moteur une pression d'entrée élevée avec un débit faible, et pour la pompe une pression de refoulement faible avec un débit fort. En pratique le produit de la cylindrée de la pompe de gavage 20 par sa vitesse de rotation, est égal au produit de la cylindrée du moteur hydraulique 30 par sa vitesse de rotation, multiplié par un rapport K. Les débits de ces deux machines sont aussi proportionnels suivant le même rapport, en négligeant les pertes.

L'inertie de l'ensemble mécanique en rotation comprenant les rotors du moteur hydraulique 30 et de la pompe de gavage 20 sont faibles, de manière à obtenir une dynamique élevée permettant d'obtenir une réponse très rapide en fonction des variations de l'écart entre la haute et la basse pression raccordées à ce moteur.

Le circuit basse pression 16 comporte en option un clapet de régulation de la pression de gavage 28, qui laisse passer le fluide au-dessus d'un seuil de pression pour le renvoyer vers le réservoir 24.

Le fonctionnement du dispositif de gavage comprenant une régulation automatique de la pression de gavage qui tend à converger vers un équilibre, est le suivant.

Avec l'égalité des puissances des deux machines, l'écart entre la haute pression Php et la basse pression Pbp reliées au moteur hydraulique 30, divisé par l'écart entre la basse pression Pbp et la pression du réservoir Pres reliées à la pompe de gavage 20, est égal au rapport K :

$$(Php - Pbp) / (Pbp - Pres) = K$$

On en déduit que :

$$Pbp = 1 / (K + 1) Php + K / (K + 1) Pres$$

Avec la pression du réservoir qui est nulle, la basse pression Pbp varie donc bien dans les mêmes proportions que la haute pression Php. Si la basse pression Php est supérieure à sa valeur normale, la charge de la pompe de gavage 20 augmente et l'écart de pression vu par le moteur hydraulique 30 diminue, ces deux facteurs font que ce moteur ralentit, ce qui fait baisser le débit ainsi que cette basse pression.

Si la basse pression Pbp est inférieure à sa valeur nominale, à l'inverse la charge de la pompe de gavage 20 et l'écart de pression vu par le moteur hydraulique 30 augmente, ces deux facteurs font que ce moteur accélère, ce qui fait augmenter le débit ainsi que cette basse pression. On a un système autorégulé.

Le besoin de rechargement du circuit hydraulique en fluide, prélevé dans le réservoir 24 par le fonctionnement de la pompe de gavage 20, est lié au débit de fuite des différents équipements de ce circuit qui perdent du fluide pour le retourner vers le réservoir.

De plus on notera que lorsque la pompe de gavage 20 tourne suite à une basse pression 16 trop faible, elle prélève du fluide dans le circuit haute pression 12 en passant par le moteur hydraulique 30, qui alimente alors ce circuit basse pression. Ce passage améliore la dynamique du système en remontant plus vite la pression dans le circuit basse pression 16.

En particulier, le dimensionnement du moteur hydraulique 30 et des canalisations fait que la pompe de gavage 20 étant bloquée, le débit de fuite dans ce moteur est faible. Le rendement de ce dispositif de gavage est optimisé, puisqu'il est en permanence ajusté en fonction des fuites de l'ensemble du circuit hydraulique.

On peut en variante utiliser une autre source de haute pression pour alimenter le moteur hydraulique 30, qui peut être en particulier une pression de commande d'un équipement du circuit hydraulique.

On réalise ainsi de manière simple et économique avec des moyens uniquement hydrauliques, sans utiliser de puissance électrique, un dispositif de gavage qui maintient une pression précise quelles que soient les conditions de fonctionnement. Ce dispositif permet d'optimiser le fonctionnement d'un circuit hydraulique en particulier pour un véhicule hybride, afin de réduire sa consommation d'énergie.

## Revendications

1. Dispositif de gavage pour un circuit hydraulique comprenant un circuit haute pression (12) et un circuit basse pression (16) reliés à un système générant la haute pression et à des récepteurs, ce dispositif de gavage maintenant une pression minimum dans le circuit basse pression, et comportant un moteur hydraulique (30) dont l'entrée est reliée au circuit haute pression (12) et la sortie au circuit basse pression (16), **caractérisé en ce que** le moteur hydraulique (30) entraîne une pompe de gavage (20) aspirant le fluide dans un réservoir (24), pour le refouler dans ce circuit basse pression, **en ce que** le moteur hydraulique (30) entraîne suivant un rapport de vitesse constant la pompe de gavage (20) et **en ce que** la pompe de gavage (20) et le moteur hydraulique (30) sont dimensionnés de manière à ce que le produit de la cylindrée de la pompe par sa vitesse de rotation, soit égal au produit de la cylindrée du moteur par sa vitesse de rotation, multiplié par un rapport K, l'écart entre la haute pression et la basse pression, divisé par l'écart entre la basse pression et la pression du réservoir, donnant ce rapport K.

2. Dispositif de gavage selon la revendication 1, **caractérisé en ce que** l'entraînement de la pompe de gavage (20) par le moteur hydraulique (30) se fait avec une liaison directe entre les arbres de ces deux machines qui sont alignés.

3. Dispositif de gavage selon la revendication 1, **caractérisé en ce que** l'entraînement de la pompe de gavage (20) par le moteur hydraulique (30) se fait avec une transmission comprenant une démultiplication constante.

4. Dispositif de gavage selon l'une quelconque des revendications précédentes, **caractérisé en ce que** le circuit basse pression (16) comporte un clapet de régulation de la pression de gavage (28), qui laisse passer le fluide au-dessus d'un seuil de pression pour le renvoyer vers le réservoir (24).

5. Dispositif de gavage selon l'une quelconque des revendications précédentes, **caractérisé en ce qu'**il comporte un dimensionnement du moteur hydraulique (30) et des canalisations d'alimentation de ce moteur, qui donne quand la pompe de gavage (20) est bloquée, un débit de fuite dans ce moteur qui est faible.

6. Circuit hydraulique disposant d'un circuit haute pression (12) et d'un circuit basse pression (16) reliés à un système générant la haute pression et à des récepteurs, ce circuit comportant un dispositif de gavage maintenant une pression minimum dans le circuit basse pression, **caractérisé en ce que** ce dispositif de gavage est réalisé selon l'une quelconque des revendications précédentes.

7. Véhicule automobile hybride comprenant un circuit hydraulique disposant d'un circuit haute pression (12) et d'un circuit basse pression (16) reliés à un système générant la haute pression et à des récepteurs, ce circuit comportant un dispositif de gavage maintenant une pression minimum dans le circuit basse pression, **caractérisé en ce que** ce dispositif de gavage est réalisé selon l'une quelconque des revendications 1 à 5.

## Patentansprüche

1. Speisevorrichtung für einen Hydraulikkreis, einen Hochdruckkreis (12) und einen Niederdruckkreis (16) umfassend, die mit einem System verbunden sind, das den Hochdruck erzeugt, sowie mit Empfängern, wobei diese Speisevorrichtung einen Mindestdruck im Niederdruckkreis aufrechterhält, und einen Hydraulikmotor (30) umfassend, dessen Eingang mit dem Hochdruckkreis (12) verbunden ist, und der Ausgang mit dem Niederdruckkreis (16), **dadurch gekennzeichnet, dass** der Hydraulikmotor (30) eine Speisepumpe (20) antreibt, welche die Flüssigkeit in einen Behälter (24) ansaugt, um sie in diesen Niederdruckkreis zu fördern, dadurch, dass der Hydraulikmotor (30) entsprechend einem konstanten Geschwindigkeitsverhältnis die Speisepumpe (20) antreibt und dadurch, dass die Speisepumpe (20) und der Hydraulikmotor (30) bemessen sind, sodass das Produkt des Hubraumes der Pumpe und ihrer Rotationsgeschwindigkeit gleich dem Produkt des Hubraumes des Motors und seiner Rotationsgeschwindigkeit multipliziert mit einem Verhältnis K ist, wobei die Abweichung zwischen dem Hochdruck und dem Niederdruck, geteilt durch die Abweichung zwischen dem Niederdruck und dem Behälterdruck dieses Verhältnis K ergibt.

2. Speisevorrichtung nach Anspruch 1, **dadurch gekennzeichnet, dass** der Antrieb der Speisepumpe (20) durch den Hydraulikmotor (30) über eine Direktverbindung zwischen den Wellen dieser beiden Maschinen erfolgt, die zueinander ausgerichtet sind.

3. Speisevorrichtung nach Anspruch 1, **dadurch gekennzeichnet, dass** der Antrieb der Speisepumpe (20) durch den Hydraulikmotor (30) über ein Getriebe erfolgt, das eine konstante Übersetzung umfasst.

4. Speisevorrichtung nach irgendeinem der vorhergehenden Ansprüche, **dadurch gekennzeichnet, dass** der Niederdruckkreis (16) eine Regelklappe für den Speisedruck (28) umfasst, welche die Flüssigkeit über einem Druckgrenzwert durchströmen lässt, um sie in den Behälter (24) zurückzuführen.

5. Speisevorrichtung nach irgendeinem der vorhergehenden Ansprüche, **dadurch gekennzeichnet, dass** sie eine Bemessung des Hydraulikmotors (30) und der Versorgungskanalleitungen für diesen Motor umfasst, welche, wenn die Speisepumpe (20) blockiert ist, eine Leckrate in diesem Motor ergibt, die gering ist.

6. Hydraulikkreis, der über einen Hochdruckkreis (12) und einen Niederdruckkreis (16) verfügt, die mit einem System verbunden sind, das den Hochdruck erzeugt, sowie mit Empfängern, wobei dieser Kreis eine Speisevorrichtung umfasst, die einen Mindestdruck im Niederdruckkreis aufrechterhält, **dadurch gekennzeichnet, dass** diese Speisevorrichtung nach irgendeinem der vorhergehenden Ansprüche ausgeführt ist.

7. Hybrid-Kraftfahrzeug, einen Hydraulikkreis umfassend, der über einen Hochdruckkreis (12) und einen Niederdruckkreis (16) verfügt, die mit einem System verbunden sind, das den Hochdruck erzeugt, sowie mit Empfängern, wobei dieser Kreis eine Speisevorrichtung umfasst, die einen Mindestdruck im Niederdruckkreis aufrechterhält, **dadurch gekennzeichnet, dass** diese Speisevorrichtung nach irgendeinem der Ansprüche 1 bis 5 ausgeführt ist.

## Claims

1. Booster device for a hydraulic circuit comprising a high-pressure circuit (12) and a low-pressure circuit (16) both connected to a system generating the high pressure and to receivers, this booster device maintaining a minimum pressure in the low-pressure circuit, and comprising a hydraulic motor (30), the inlet of which is connected to the high-pressure circuit (12) and the outlet to the low-pressure circuit (16), **characterised in that** the hydraulic motor (30) drives a booster pump (20) aspirating the fluid in a reservoir (24) in order to discharge it into this low-pressure circuit, **in that** the hydraulic motor (30) drives the booster pump (20) at a constant speed ratio and **in that** the booster pump (20) and the hydraulic motor (30) are sized so that the product of the displacement of the pump and its rotation speed is equal to the product of the cubic capacity of the motor and its rotation speed, multiplied by a ratio K, the difference between the high pressure and the low pressure, divided by the difference between the low pressure and the pressure of the reservoir, giving this ratio K.

2. Booster device according to claim 1, **characterised in that** the booster pump (20) is driven by the hydraulic motor (30) with a direct connection between the shafts of these two machines, which are aligned.

3. Booster device according to claim 1, **characterised in that** the booster pump (20) is driven by the hydraulic motor (30) with a transmission comprising a constant reduction.

4. Booster device according to any of the preceding claims, **characterised in that** the low-pressure circuit (16) comprises a valve for regulating the booster pressure (28), which allows the fluid to pass above a pressure threshold in order to send it to the reservoir (24).

5. Booster device according to any of the preceding claims, **characterised in that** it comprises a sizing of the hydraulic motor (30) and pipes supplying this motor which, when the booster pump (20) is blocked, gives a leakage rate in this motor that is low.

6. Hydraulic circuit having a high-pressure circuit (12) and a low-pressure circuit (16) both connected to a system generating the high pressure and to receivers, this circuit comprising a booster device maintaining a minimum pressure in the low-pressure circuit, **characterised in that** this booster device is produced according to any of the preceding claims.

7. Hybrid motor vehicle comprising a hydraulic circuit having a high-pressure circuit (12) and a low-pressure circuit (16) both connected to a system generating the high pressure and to receivers, this circuit comprising a booster device maintaining a minimum pressure in the low-pressure circuit, **characterised in that** this booster device is produced according to any of claims 1 to 5.

## Fig. 1

## Fig. 2

## Fig. 3

## RÉFÉRENCES CITÉES DANS LA DESCRIPTION

**Documents brevets cités dans la description**

- FR 2978506 A1
- WO 2011045519 A1
- US 2010141024 A1
- US 2005132701 A1